(19) Europäisches Patentamt / European Patent Office / Office européen des brevets

(11) **EP 3 536 392 A1**

(12) **EUROPEAN PATENT APPLICATION**
published in accordance with Art. 153(4) EPC

(43) Date of publication:
**11.09.2019 Bulletin 2019/37**

(21) Application number: **17866779.6**

(22) Date of filing: **31.10.2017**

(51) Int Cl.:
*B01D 69/00* (2006.01)    *B01D 67/00* (2006.01)
*B01D 69/08* (2006.01)    *B01D 71/34* (2006.01)
*C08J 9/26* (2006.01)

(86) International application number:
**PCT/JP2017/039267**

(87) International publication number:
**WO 2018/084131 (11.05.2018 Gazette 2018/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.11.2016 JP 2016216303**

(71) Applicant: **Asahi Kasei Medical Co., Ltd.**
**Tokyo 1000006 (JP)**

(72) Inventors:
• **IWASAKI, Takuma**
  **Tokyo 101-8101 (JP)**
• **NAKASHIMA, Shota**
  **Tokyo 101-8101 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **POROUS FILM AND METHOD FOR MANUFACTURING POROUS FILM**

(57)    A porous membrane comprising a thermoplastic resin, and having a densely structured layer, wherein the ratio of α crystal strength to β crystal strength of the thermoplastic resin in the densely structured layer is 5.0 or more.

Fig. 1

EP 3 536 392 A1

**Description**

Technical Field

The present invention relates to a filtration technique and relates to a porous membrane and a method for manufacturing a porous membrane.

Background Art

In recent years, the risk of pathogens, such as viruses and pathogenic proteins, contained in liquids has been a problem in administering plasma derivatives, biopharmaceuticals, or liquid formulations containing biologically active substances such as plasma for transfusion to human bodies. Hence, there has been a need for a method for removing or deactivating these pathogens.

The method for deactivating viruses is, for example, heat treatment or chemical agent treatment (e.g., solvent/detergent (S/D) treatment). However, these methods are limited by their deactivating effects, depending on the species of viruses. For example, the heat treatment method is not effective for thermostable viruses such as hepatitis A virus. Also, the S/D treatment is not effective in principle for viruses having no lipid membrane, such as parvovirus. Furthermore, for the chemical agent treatment method, there is apprehension that the chemical agent used remains in liquid formulations and is thereby administered to human bodies. Hence, the step of removing the chemical agent may be necessary.

The method for physically removing viruses is a membrane filtration method. The membrane filtration method separates substances according to the sizes of the substances and is therefore independent of the chemical properties or thermal properties of viruses. Hence, this method is effective for the removal of every virus.

The species of viruses include parvovirus having a diameter on the order of 18 nm to 24 nm, which is the smallest, poliovirus having a diameter on the order of 25 nm to 30 nm, etc. Also, a relatively large virus is, for example, HIV virus having a diameter of 80 nm to 100 nm. A porous membrane having at least a maximum pore size of 100 nm or smaller is necessary for physically removing such viruses by the membrane filtration method. In recent years, there has been a demand for, particularly, a porous membrane capable of removing small viruses such as parvovirus.

The porous membrane for use in virus removal may be subjected to sterilization treatment in a final step of its production. The sterilization treatment is, for example, a method using an agent, a method using irradiation with ultraviolet ray or $\gamma$ ray, or a method of heating using a high temperature of water vapor. However, in the case where the agent is used, the agent remaining, albeit in a very small amount, in the porous membrane might have an adverse effect on human bodies. The method using irradiation with ultraviolet ray is not suitable for a final step of the porous membrane because of low permeability to ultraviolet ray. The method using irradiation with $\gamma$ ray may cause irradiation damage to the porous membrane. On the other hand, the method of heating using a high temperature of water vapor is a safe and reliable method and is suitable. In this case, the porous membrane is required to have heat resistance (see, for example, Patent Literatures 1 to 3). In addition, a porous membrane having heat resistance has been desired not only for the porous membrane for virus removal but in various technical fields.

Citation List

Patent Literature

Patent Literature 1: Japanese Patent Laid-Open No. 60-97001
Patent Literature 2: Japanese Patent No. 3979521
Patent Literature 3: Japanese Patent No. 4531395

Summary of Invention

Technical Field

An object of the present invention is to provide a porous membrane excellent in heat resistance, and a method for manufacturing the porous membrane.

Solution to Problem

According to an aspect of the present invention, a porous membrane comprising a thermoplastic resin, and having a densely structured layer, wherein the ratio of $\alpha$ crystal strength to $\beta$ crystal strength of the thermoplastic resin in the densely structured layer is 5.0 or more is provided.

In the above porous membrane, the maximum pore size may be 23.5 nm or larger and 30.0 nm or smaller.

In the above porous membrane, the thermoplastic resin may be polyvinylidene fluoride.

In the above porous membrane, a graft chain having a hydrophilic monomer unit may be introduced in pore surface.

In the above porous membrane, the graft ratio may be 5% or more and 20% or less.

The above porous membrane may further have a coarsely structured layer.

The above porous membrane may be a hollow fiber membrane.

In the above porous membrane, the ratio of $\alpha$ crystal strength to $\beta$ crystal strength of the thermoplastic resin in the densely structured layer may be 11.0 or less.

Also, according to an aspect of the present invention, a method for manufacturing a porous membrane, comprising: a mixing step of obtaining a mixture of a thermoplastic resin and a plasticizer; a membrane formation step of forming a porous membrane having a densely structured layer from the mixture; a plasticizer removal step of removing the plasticizer from the porous membrane; and a heat treatment step of heat-treating the porous membrane of which the plasticizer is removed at a temperature of 132°C or higher and lower than the melting point of the thermoplastic resin, wherein the ratio of $\alpha$ crystal strength to $\beta$ crystal strength of the thermoplastic resin in the densely structured layer is 5.0 or more is provided.

In the above method for manufacturing the porous membrane, the heat treatment step may be carried out for one hour or longer and nine hours or shorter.

In the above method for manufacturing the porous membrane, the heat treatment step may be carried out while the porous membrane of which the plasticizer is removed is pulled in at least two directions.

In the above method for manufacturing the porous membrane, the maximum pore size of the heat-treated porous membrane may be 23.5 nm or larger and 30.0 nm or smaller.

In the above method for manufacturing the porous membrane, the thermoplastic resin may be polyvinylidene fluoride.

The above method for manufacturing the porous membrane may further comprise a hydrophilization treatment step of graft-polymerizing a hydrophilic monomer to the heat-treated porous membrane.

In the above method for manufacturing the porous membrane, the porous membrane formed in the membrane formation step may further have a coarsely structured layer.

In the above method for manufacturing the porous membrane, the porous membrane may be a hollow fiber membrane.

In the above method for manufacturing the porous membrane, the ratio of $\alpha$ crystal strength to $\beta$ crystal strength of the thermoplastic resin in the densely structured layer may be 11.0 or less.

In the above method for manufacturing the porous membrane, in the heat treatment step, the porous membrane of which the plasticizer is removed may be heat-treated at a temperature of 132°C or higher and 150°C or lower.

Advantageous Effects of Invention

The present invention makes it possible to provide a porous membrane excellent in heat resistance, and a method for manufacturing the porous membrane.

Brief Description of Drawings

Figure 1 is an image diagram for calculating $\alpha$ crystal strength on the basis of a graph showing an infrared absorption spectrum.

Figure 2 is a graph showing the infrared absorption spectrum of a dense layer in porous membranes according to Example 1 and Comparative Examples 1 and 4.

Figure 3 is a table showing the ratio of $\alpha$ crystal strength to $\beta$ crystal strength in the porous membranes according to Example 1 and Comparative Examples 1 and 4.

Figure 4 is a graph showing the strength ratio of $\alpha$ crystal strength to $\beta$ crystal strength in the porous membranes according to Example 1 and Comparative Examples 1 and 4.

Figure 5 is a table showing the shrinkage of porous membranes according to Examples 1, 2 and 3 and Comparative Examples 1, 2 and 3 ascribable to dry heat treatment at 130°C.

Figure 6 is a graph showing the water penetration quantities of the porous membranes according to Example 1 and Comparative Example 1.

Figure 7 is a graph showing the bubble points of the porous membranes according to Example 1 and Comparative Example 1.

Figure 8 is a table showing change in water permeation rate between before and after steam sterilization at 130°C of filters prepared from porous membranes according to Example 8 and Comparative Example 6.

Figure 9 is a graph showing the water penetration quantities of the porous membranes according to Example 8 and Comparative Example 6.

Figure 10 is a graph showing the bubble points of the porous membranes according to Example 8 and Comparative Example 6.

Figure 11 is a table showing the structures and water penetration quantities of the porous membranes according to Example 8 and Comparative Example 6.

Description of Embodiments

Hereinafter, the preferred embodiment for carrying out the present invention (hereinafter, referred to as the "embodiment") will be described in detail. The embodiment given below illustrates a material or a method for concretizing the technical idea of this invention. The technical idea of this invention does not limit combinations of constituent members, etc. to those described below. Various changes or modifications can be made in the scope of claims without departing from the technical idea of this invention.

A porous membrane according to the embodiment comprises a thermoplastic resin and has a densely structured layer. The crystal structure of the thermoplastic resin includes at least $\alpha$ crystals and $\beta$ crystals. The $\alpha$ crystals have lower potential energy, are more stable, and have a higher melting point, as compared with the $\beta$ crystals. In the porous membrane according to the embodiment, the ratio of $\alpha$ crystal strength to $\beta$ crystal strength of the thermoplastic resin in the densely structured layer is 5.0 or more, 5.5 or more, 6.0 or more, or 6.5 or more. In the case where the ratio of $\alpha$ crystal strength to $\beta$ crystal strength of the thermoplastic resin in the dense layer is 5.0 or more, the heat resistance of the porous membrane is improved so that the shrinkage of the porous membrane is reduced. Hence, for example, even if a user who has purchased the manufactured porous membrane subjects the porous membrane to treatment such as high-pressure steam sterilization, the porous membrane is prevented from being shrunk or deformed. Moreover, decrease in water permeation rate caused by heat treatment is suppressed because a pore structure in the dense layer is less likely to change. In this context, the heat resistance refers to capability by which the structure of the porous membrane is less likely to change when heat-treated. Meanwhile, in the case of modifying (e.g., hydrophilizing) the surface of the porous membrane according to the embodiment by a method such as graft polymerization as described later, it is preferred that unstable $\beta$ crystals, which serve as the starting point of graft polymerization reaction, should exist at a given ratio in the porous membrane. Thus, for example, in the case of preventing protein adsorption to the porous membrane by graft-polymerizing a hydrophilic monomer thereto, a sufficient graft ratio tends to be obtained in the presence of $\beta$ crystals at a given ratio in the porous membrane. The ratio of $\alpha$ crystal strength to $\beta$ crystal strength of the thermoplastic resin in the densely structured layer of the porous membrane is preferably 11.0 or less, 9.0 or less, or 8.0 or less, from the viewpoint of attaining both sufficient heat resistance and a sufficient graft ratio.

The ratio of $\alpha$ crystal strength to $\beta$ crystal strength in the thermoplastic resin can be measured with an infrared spectrophotometer or the like. In this context, the $\alpha$ crystal strength refers to the height of a peak indicating $\alpha$ crystals in an absorption spectrum measured in an infrared spectrophotometer. Also, the $\beta$ crystal strength refers to the height of a peak indicating $\beta$ crystals in an absorption spectrum measured in an infrared spectrophotometer.

The porous membrane may be in a hollow fiber form or may be in a flat membrane form. The membrane thickness of the porous membrane is, for example, 15 $\mu$m or larger and 1000 $\mu$m or smaller, preferably 15 $\mu$m or larger and 500 $\mu$m or smaller, more preferably 20 $\mu$m or larger and 100 $\mu$m or smaller. In the case where the membrane thickness is smaller than 15 $\mu$m, the strength of the porous membrane tends to be insufficient. In the case where the membrane thickness exceeds 1000 $\mu$m, the penetration capability of the porous membrane tends to be insufficient. In the case of a hollow fiber form, there is a tendency that a flow rate is improved so that a throughput rate is improved.

The porous membrane has a coarsely structured layer having a large aperture ratio and a densely structured layer having a small aperture ratio. It is preferred for the porous membrane to have a multilayer structure where the coarsely structured layer exists near at least one membrane surface. The coarsely structured layer is a layer having a relatively large aperture ratio in the porous membrane. For example, in the case of filtering a protein solution through the porous membrane, the coarsely structured layer exerts functions as a prefilter against impurities having a large volume contained in the protein solution.

The densely structured layer is a layer having a relatively small aperture ratio in the porous membrane. The pore size of the porous membrane is substantially governed by the pore size of the densely structured layer. Thus, the performance, such as water permeation rate, of the porous membrane tends to be governed by the structure of the dense layer. It is preferred that the structure of the dense layer is stable against heat treatment. For example, in the case of filtering a protein solution through the porous membrane, microbes such as viruses are removed by the densely structured layer.

Both the aperture ratio and the porosity of the porous membrane are based on the volume ratio of pore moieties in the porous membrane. The aperture ratio of the porous membrane represents an area ratio occupied by the pore moieties at the cross section of the porous membrane. The aperture ratio is determined from image analysis on the electron micrograph of the cross section of the porous membrane. Change in the volume ratio of the pore moieties in the membrane thickness direction can be examined, for example, by measuring aperture ratios at intervals of a given thickness in the membrane thickness direction at the cross section of the porous membrane. In the case of, for example, a porous membrane having a maximum pore size of 300 nm or smaller, aperture ratios may be measured at 2.5-$\mu$m intervals in the membrane thickness direction at the cross section of the porous membrane. An average aperture ratio of the whole or at least a portion in the membrane thickness direction may be further calculated on the basis of the aperture ratios measured at intervals of the predetermined thickness in the membrane thickness direction.

The porosity of the porous membrane is determined from the apparent volume of the porous membrane (which is determined from the cross-sectional area of the porous membrane and the length of the porous membrane), the mass of the porous membrane, and the true density of the material of the porous membrane. The porosity of the porous membrane is, for example, 30% or more and 90% or less, preferably 35% or more and 85% or less, more preferably 40% or more and 80%. In the case where the porosity is less than 30%, the filtration rate of the porous membrane tends to be decreased. In the case where the porosity exceeds 90%, there is a tendency that the removal capability of the porous membrane for viruses, etc. is reduced and the strength of the porous membrane is reduced.

The coarsely structured layer is a layer that exists in the thickness direction adjacently to the membrane surface and has a large aperture ratio. The aperture ratio of the coarsely structured layer is, for example, the average aperture ratio of the whole membrane thickness + 2.0% or more, preferably the average aperture ratio of the whole membrane thickness + 2.5% or more, more preferably the average aperture ratio of the whole membrane thickness + 3.0% or more. The aperture ratio of the coarsely structured layer is, for example, the average aperture ratio of the whole membrane thickness + 60% or less, preferably the average aperture ratio of the whole membrane thickness + 55% or less, more preferably the average aperture ratio of the whole membrane thickness + 50% or less.

In the case where the aperture ratio of the coarsely structured layer is the average aperture ratio of the whole membrane thickness + 2.0% or more, the coarsely structured layer exerts functions as a prefilter and is capable of improving the throughput of the porous membrane because of large difference in aperture ratio from the densely structured layer. However, in the case where the aperture ratio of the coarsely structured layer is larger than the average aperture ratio of the whole membrane thickness + 60%, the coarsely structured layer may not sufficiently exert functions as a prefilter because its structure is more coarse than necessary.

The coarsely structured layer preferably comprises a portion where an aperture ratio equals to the average aperture ratio of the whole membrane thickness + 5.0% or more and more preferably comprises a portion where an aperture ratio equals to the average aperture ratio of the whole membrane thickness + 8.0% or more. In the case where the coarsely structured layer comprises a portion where an aperture ratio equals to the average aperture ratio of the whole membrane thickness + 5.0% or more, the coarsely structured layer is capable of exerting further functions as a prefilter. In the coarsely structured layer, a portion having the largest aperture ratio preferably exists in contact with the membrane surface or near the membrane surface.

For the coarsely structured layer, it is preferred that the aperture ratio is continuously tapered from the membrane surface toward the densely structured layer. Since the aperture ratio is continuously tapered and the pore size is continuously decreased accordingly, large impurities can be removed near the membrane surface whereas smaller impurities can be removed at stages as going through the inside of the coarsely structured layer. However, discontinuously large change in the aperture ratio at the boundary between the coarsely structured layer and the densely structured layer is not preferred because impurities are deposited near the boundary, causing decrease in filtration rate.

The thickness of the coarsely structured layer in the porous membrane is, for example, 2.5 $\mu$m or larger, preferably 5 $\mu$m or larger. In the case where the thickness of the coarsely structured layer is 2.5 $\mu$m or larger, the coarsely structured layer tends to exert functions as a prefilter.

The densely structured layer is a layer having a small aperture ratio. In the porous membrane, the average aperture ratio of a layer having an aperture ratio of less than the average aperture ratio of the whole membrane thickness + 2.0% is defined as $A_P$. The aperture ratio of the densely structured layer is, for example, in the range of $A_P \pm 2.0\%$, preferably in the range of $A_P \pm 1.0\%$. In the case where the aperture ratio falls within the range of $A_P \pm 2.0\%$, the densely structured layer can have a homogeneous structure and is therefore suitable for virus removal by depth filtration. The densely structured layer has a void structure within spherocrystals disclosed in, for example, International Publication No. WO 01/28667.

The thickness of the densely structured layer in the porous membrane is, for example, 50% or more, preferably 55% or more, more preferably 60% or more, of the whole membrane thickness. In the case where the thickness of the densely structured layer is 50% more of the whole membrane thickness, the densely structured layer is suitable for virus removal by depth filtration.

The porous membrane may have an intermediate layer, in addition to the coarsely structured layer and the densely structured layer. In the intermediate layer, the aperture ratio is less than the average aperture ratio of the whole membrane thickness + 2.0%, but does not correspond to the aperture ratio of the densely structured layer. The intermediate layer exists, for example, between the coarsely structured layer and the densely structured layer.

In the case of using the porous membrane in virus removal in a liquid, it is preferred that the porous membrane have no skin layer on the surface. The skin layer usually has a pore size smaller than that of the porous membrane and has a thickness of 1 $\mu$m or smaller. In the case where the skin layer exists on the porous membrane surface, impurities contained in a protein solution or the like may be deposited on the skin layer surface, reducing penetration performance.

The maximum pore size of the porous membrane determined by the bubble point method conforming to ASTMF316-86 is, for example, 23.5 nm or larger and 30.0 nm or smaller, preferably 24.0 nm or larger and 29.5 nm or smaller, more preferably 24.5 nm or larger and 29.0 nm or smaller, from the viewpoint of removing small viruses and from the viewpoint of permeability to biologically active substances such as globulin, and a filtration rate.

The average pore size of the porous membrane surface adjacent to the coarsely structured layer is at least two or more times the maximum pore size determined by the bubble point method, preferably three or more times the maximum pore size determined by the bubble point method. In the case where the average pore size of the porous membrane surface adjacent to the coarsely structured layer is less than two times the maximum pore size determined by the bubble point method, impurities may be deposited on the porous membrane surface, decreasing a filtration rate.

However, in the case of using the porous membrane in virus removal, the average pore size of the porous membrane surface adjacent to the coarsely structured layer is, for example, 3 $\mu$m or smaller, preferably 2 $\mu$m or smaller.

The water permeation rate of the porous membrane may vary depending on a pore size and is, for example, 5.0 or more and 120.0 or less, preferably 10.0 or more and 115.0 or less, more preferably 15.0 or more and 110.0 or less. The unit of the water permeation rate is L/m$^2$/h/98 kPa. In the case where the water permeation rate is less than 5.0, practical filtration may be difficult. In the case where the water permeation rate exceeds 120.0, the strength of the porous membrane may be reduced or removal capability for viruses, etc. may be reduced.

The rate of decrease in water permeation rate caused by the steam sterilization of the porous membrane at 130°C is, for example, 4.0% or less, preferably 3.5% or less, more preferably 3.0% or less.

The tensile strength of the porous membrane is, for example, $1 \times 10^6$ N/m$^2$ or more and $1 \times 10^8$ N/m$^2$ or less, preferably $1.5 \times 10^6$ N/m$^2$ or more and $8 \times 10^7$ N/m$^2$ or less, more preferably $2 \times 10^6$ N/m$^2$ or more and $5 \times 10^7$ N/m$^2$ or less, in the uniaxial direction. In the case where the tensile strength is less than $1 \times 10^6$ N/m$^2$, damage ascribable to bending, damage ascribable to friction, damage ascribable to impurities, and rupture ascribable to filtration pressure, etc. may occur.

The tensile breaking elongation of the porous membrane is, for example, 10% or more and 2000% or less, preferably 20% or more and 1500% or less, preferably 30% or more and 1000% or less, at least in the uniaxial direction. In the case where the tensile breaking elongation is less than 10%, damage ascribable to bending, damage ascribable to friction, damage ascribable to contamination, and rupture ascribable to filtration pressure, etc. may occur.

The rate of shrinkage of the porous membrane by dry heat treatment at 130°C is, for example, 9.0% or less, preferably 8.0% or less, more preferably 7.0% or less.

The porous membrane comprises a thermoplastic resin. In the porous membrane, the ratio of the thermoplastic resin to all resins contained in the material is, for example, 50% by mass or more, preferably 70% by mass or more, more preferably 80% by mass or more. In the case where the amount of the thermoplastic resin is less than 50% by mass, the mechanical strength of the porous membrane tends to be reduced.

The thermoplastic resin used for manufacturing the porous membrane is a thermoplastic resin having crystallinity which is used in compression, extrusion, injection, inflation, and blow molding. Examples of the thermoplastic resin can include: polyolefin resins such as polyethylene resin, polypropylene resin, and poly-4-methyl-1-pentene resin; polyester resins such as polyethylene terephthalate resin, polybutylene terephthalate resin, polyethylene naphthalate resin, polybutylene naphthalate resin, and polycyclohexylene dimethylene terephthalate resin; polyamide resins such as nylon 6, nylon 66, nylon 610, nylon 612, nylon 11, nylon 12, and nylon 46; fluorinated resins such as polyvinylidene fluoride resin, ethylene/tetrafluoroethylene resin, and polychlorotrifluoroethylene resin; polyphenylene ether resin; and polyacetal resin.

It is preferred for the porous membrane to have heat resistance, because the porous membrane may be steam-sterilized. Hence, at least one thermoplastic resin for use in the production of the porous membrane has a crystalline melting point of, for example, 140°C or higher and 300°C or lower, preferably 145°C or higher and 250°C or lower, more preferably 150°C or higher and 200°C or lower. When the porous membrane is manufactured, a resin having a crystalline melting point of lower than 140°C may be used as a portion of the material. However, the ratio of the thermoplastic resin having a crystalline melting point of 140°C or higher to all resins contained in the material is, for example, 50% by mass or more, preferably 70% by mass or more, more preferably 80% by mass or more.

**EP 3 536 392 A1**

When the porous membrane is manufactured, the inclusion of at least one thermoplastic resin having a crystalline melting point of 140°C or higher and 300°C or lower in the material can impart durability, that is a required capability, to the porous membrane against heat in a steam sterilization step which is preferably adopted for medical separation membrane purposes, or a high-temperature filtration step important for other industrial purposes. However, in the case where a thermoplastic resin having a crystalline melting point exceeding 300°C is used, it may be difficult to uniformly dissolve the resin and a plasticizer by heating when the porous membrane is maunufactured.

Among the thermoplastic resins described above, the polyvinylidene fluoride resin is excellent in the balance between heat resistance and molding processability. In this context, the polyvinylidene fluoride resin is a fluorinated resin containing a vinylidene fluoride unit in the basic skeleton and is generally called PVDF as an abbreviation. A homopolymer of vinylidene fluoride (VDF) or a copolymer of vinylidene fluoride (VDF) with one or two monomers selected from the monomer group of hexafluoropropylene (HFP), pentafluoropropylene (PFP), tetrafluoroethylene (TFE), chlorotrifluoroethylene (CTFE), and perfluoromethyl vinyl ether (PFMVE) can be used as such polyvinylidene fluoride resin. Alternatively, a mixture of a homopolymer of VDF and a copolymer of monomer(s) and VDF may be used.

When the porous membrane is manufactured, use of polyvinylidene fluoride resin containing 30% by mass or more and 100% by mass or less of the homopolymer is preferred because the crystallinity of the porous membrane is improved and the strength of the porous membrane is enhanced.

The average molecular weight of the thermoplastic resin for use in the manufacturing of the porous membrane is, for example, 50000 or larger and 5000000 or smaller, preferably 100000 or larger and 2000000 or smaller, more preferably 150000 or larger and 1000000 or smaller. The average molecular weight of the thermoplastic resin is provided as a weight-average molecular weight obtained by gel permeation chromatography (GPC) measurement. However, a resin having an average molecular weight exceeding 1000000 may be difficult to accurately measure by GPC. Hence, a viscosity-average molecular weight based on a viscosity method may be used. In the case where the average molecular weight of the thermoplastic resin is smaller than 50000, moldability may be decreased due to smaller melt tension for melt molding or the mechanical strength of the porous membrane to be manufactured may be reduced. In the case where the average molecular weight of the thermoplastic resin exceeds 5000000, the resin may be difficult to uniformly melt-knead.

The porous membrane may be hydrophilic or may be hydrophobic. In the case of filtering a solution containing biologically active substances such as proteins, it is preferred that the surface and pore surface of the porous membrane are hydrophilic. Usually, the degree of hydrophilicity can be evaluated on the basis of a contact angle. In the porous membrane, the average value of an advancing contact angle and a receding contact angle at 25°C is, for example, 60 degrees or smaller, preferably 45 degrees or smaller, more preferably 30 degrees or smaller. Alternatively, provided that upon contact of the porous membrane with water, the water spontaneously penetrates the inside of the pores of the porous membrane, the porous membrane can be confirmed to have sufficient hydrophilicity.

In order to impart hydrophilicity to the porous membrane, a graft chain having a hydrophilic monomer unit is introduced in the pore surface of the porous membrane. The rate of binding of the graft chain (graft ratio) is, for example, 5% or more and 20% or less. The graft ratio is calculated according to the following equation (1).

$$\mathrm{d_g}\ (\%)\ =\ (\mathrm{w_1}\ -\ \mathrm{w_0})\ /\ \mathrm{w_0}\ \times\ 100 \qquad (1)$$

wherein $w_0$ is the mass of the porous membrane before introduction of the graft chain, and $w_1$ is the mass of the porous membrane after introduction of the graft chain.

Next, a method for manufacturing the porous membrane according to the embodiment will be described. The method for manufacturing the porous membrane according to the embodiment comprises: a mixing step of obtaining a mixture of a thermoplastic resin and a plasticizer; a membrane formation step of forming a porous membrane having a densely structured layer from the mixture; a plasticizer removal step of removing the plasticizer from the porous membrane; and a heat treatment step of heat-treating the porous membrane of which the plasticizer is removed at a temperature of 132°C or higher and lower than the melting point of the thermoplastic resin. A porous membrane wherein the ratio of α crystal strength to β crystal strength of the thermoplastic resin in the densely structured layer is 5.0 or more is manufactured by at least the heat treatment step.

In the mixing step, the mixture containing a thermoplastic resin and a plasticizer is heated to a temperature equal to or higher than the crystalline melting point of the thermoplastic resin so that the thermoplastic resin and the plasticizer are uniformly dissolved. The mixture may be arbitrarily supplemented with additives such as an antioxidant, a crystal nucleating agent, an antistatic agent, a flame retardant, a lubricant, and an ultraviolet absorber.

The concentration of the thermoplastic resin in the mixture is, for example, 20% by mass or higher and 90% by mass or lower, preferably 30% or higher and 80% by mass or lower, more preferably 35% or higher and 70% by mass or lower. In the case where the concentration of the thermoplastic resin is lower than 20% by mass, subsequent membrane formability may be reduced or the resulting membrane may not have sufficient mechanical strength. Moreover, the resulting membrane may have insufficient virus removal capability due to a larger pore size. In the case where the concentration of the thermoplastic resin is higher than 90% by mass, the filtration rate of the resulting membrane may be decreased due to too small a pore size and smaller porosity.

A nonvolatile solvent capable of forming a uniform solution with the thermoplastic resin at a temperature equal to or higher than the crystalline melting point of the thermoplastic resin when mixed with the thermoplastic resin can be used as the plasticizer. In this context, the nonvolatile solvent has a boiling point of 220°C or higher under atmospheric pressure. The plasticizer may be a liquid or may be a solid at ordinary temperature (approximately 20°C). The plasticizer used is preferably a plasticizer of a solid-liquid phase separation system having a heat-induced solid-liquid phase separation point at a temperature equal to or higher than ordinary temperature in cooling the uniform solution with the thermoplastic resin, because a porous membrane having a small-pore size and homogeneous densely structured layer suitable for virus removal can be manufactured. One species of plasticizer may be used as the plasticizer, or a mixture of plural species of plasticizers may be used. The plasticizer includes a plasticizer of a liquid-liquid phase separation system having a heat-induced liquid-liquid phase separation point at a temperature equal to or higher than ordinary temperature in cooling the uniform solution with the thermoplastic resin. However, use of the plasticizer of a liquid-liquid phase separation system tends to increase the pore size of the membrane to be manufactured.

The heat-induced solid-liquid phase separation point of the mixture containing the thermoplastic resin and the plasticizer is obtained by measuring the exothermic peak temperature of the mixture by differential scanning calorimetry (DSC). Also, the crystallization point of the mixture containing the thermoplastic resin and the plasticizer can be obtained by differential scanning calorimetry (DSC).

A plasticizer described in International Publication No. WO 01/28667 is suitably used for manufacturing a membrane having a small-pore size and homogeneous densely structured layer suitable for virus removal. For the plasticizer for use in the embodiment, the phase separation point depression constant $\alpha$ of the mixture containing the thermoplastic resin and the plasticizer, determined according to equation (2) given below is set to, for example, 0°C or higher and 40°C or lower, preferably 1°C or higher and 35°C or lower, more preferably 5°C or higher and 30°C or lower. In the case where the phase separation point depression constant is higher than 40°C, there is a tendency that the homogeneity of the pore size of the membrane to be manufactured is reduced and the strength of the membrane to be manufactured is reduced.

$$\alpha = 100 \times (Tc^0 - Tc) / (100 - C) \quad (2)$$

In equation (2), $\alpha$ represents the phase separation point depression constant (°C), $Tc°$ represents the crystallization temperature (°C) of the thermoplastic resin, $Tc$ represents the heat-induced solid-liquid phase separation point (°C) of the mixture, and C represents the concentration (% by mass) of the thermoplastic resin in the mixture.

In the case of using polyvinylidene fluoride resin as the thermoplastic resin, dibutyl phthalate (DBP), dicyclohexyl phthalate (DCHP), triphenyl phosphate (TPP), cresyl diphenyl phosphate (CDP), tricresyl phosphate (TCP), or the like can be used as the plasticizer.

There are a plurality of concreate methods for uniformly dissolving the mixture containing the thermoplastic resin and the plasticizer. The first method for uniformly dissolving the mixture containing the thermoplastic resin and the plasticizer involves adding the thermoplastic resin to a continuous resin kneading apparatus such as an extruder, introducing the plasticizer at an arbitrary ratio while melting the thermoplastic resin by heating, and screw-kneading the mixture. The thermoplastic resin to be added may be in any of a powder form, a granule form, and a pellet form. For the first method, it is preferred that the plasticizer is a liquid at ordinary temperature. A single-screw extruder, a counter-rotating twin-screw extruder, a co-rotating twin-screw extruder, or the like can be used as the extruder.

The second method for uniformly dissolving the mixture containing the thermoplastic resin and the plasticizer involves mixing and dispersing the thermoplastic resin and the plasticizer in advance using a stirring apparatus such as a Henschel mixer, adding the obtained mixture to a continuous resin kneading apparatus such as an extruder, and melt-kneading the mixture. The mixture to be added to an extruder or the like is in a slurry form in the case where the plasticizer is a liquid at ordinary temperature, and is in a powder form, a granule form, or the like in the case where the plasticizer is a solid at ordinary temperature.

Alternatively, in the case of uniformly dissolving the mixture containing the thermoplastic resin and the plasticizer, a simple resin kneading apparatus such as Brabender or a mill may be used, or the mixture may be melt-kneaded in any of other batch-type kneading containers.

In the membrane formation step of forming a porous membrane from the mixture, the mixture is discharged from a discharge port to form a membrane. Examples of the discharge port include T dies, circular dies, and circular spinnerets. The membrane may be in a hollow fiber form or may be in a flat membrane form.

The membrane formed from the mixture discharged from the discharge port is taken over at a taking-over rate at which draft ratio $R_D$ determined according to the following equation (3) is, for example, 1.0 or more and 12.0 or less, preferably 1.5 or more and 9.0 or less, more preferably 1.5 or more and 7.0 or less.

$$R_D = S_W / S_D \quad (3)$$

In equation (3), $S_W$ represents the taking-over rate of the membrane, and $S_D$ represents the discharge rate of the mixture in the discharge port.

In the case where the draft ratio is less than 1.0, the moldability of the membrane may be reduced due to the absence of tension on the membrane. In the case where the draft ratio exceeds 12.0, the membrane is stretched so that the coarsely structured layer having a sufficient thickness may be difficult to form.

The discharge rate $S_D$ of the mixture in the discharge port is determined according to the following equation (4).

$$S_D = V_D / A_D \quad (4)$$

In equation (4), $V_D$ represents the volume of the mixture discharged per unit time, and $A_D$ represents the area of the discharge port.

The discharge rate is, for example, 1 m/min or higher and 60 m/min or lower, preferably 3 m/min or higher and 40 m/min or lower. In the case where the discharge rate is lower than 1 m/min, the productivity of the membrane may be reduced or the amount of the mixture discharged may vary largely. In the case where the discharge rate exceeds 60 m/min, the discharge status may be unstable due to turbulent flow generated in the discharge port.

The taking-over rate of the membrane is set according to the discharge rate of the mixture. The taking-over rate of the membrane is, for example, 1 m/min or higher and 200 m/min or lower, preferably 3 m/min or higher and 150 m/min or lower. In the case where the taking-over rate is lower than 1 m/min, the productivity and moldability of the membrane may be reduced. In the case where the taking-over rate exceeds 200 m/min, the membrane may be torn due to a shorter cooling time for the membrane or larger tension applied to the membrane.

While the uncured membrane is taken over at the draft ratio described above, one surface of the membrane is contacted with a nonvolatile liquid having the property of partially dissolving the thermoplastic resin, for example, a nonvolatile liquid heated to 50°C or higher, to form a coarsely structured layer in the membrane. The nonvolatile liquid to be contacted with the thermoplastic resin is a liquid having a boiling point exceeding 220°C at 1 atm. In this context, the nonvolatile liquid is diffused to the inside of the membrane so that the thermoplastic resin is partially dissolved to form a coarsely structured layer in the membrane.

The temperature of the nonvolatile liquid for use in introducing the coarsely structured layer to the membrane is, for example, 50°C or higher, preferably 60°C or higher, and is equal to or lower than the temperature of the mixture of the thermoplastic resin and the plasticizer. The temperature of the nonvolatile liquid is more preferably 130°C or higher and is equal to or lower than a temperature lower by 10°C from the temperature of the mixture of the thermoplastic resin and the plasticizer. In the case where the temperature of the nonvolatile liquid is lower than 100°C, the property of dissolving the thermoplastic resin is reduced so that the coarsely structured layer having a sufficient thickness may be difficult to form. In the case where the temperature of the nonvolatile liquid exceeds the temperature of the mixture of the thermoplastic resin and the plasticizer, the moldability of the membrane may be reduced.

The nonvolatile liquid having the property of partially dissolving the thermoplastic resin is a nonvolatile liquid capable of forming a uniform solution at a temperature of 100°C or higher and 250°C or lower, preferably 120°C or higher and 200°C or lower, when mixed at a concentration of 50% by mass with the thermoplastic resin. A liquid that forms a uniform solution with the thermoplastic resin at a temperature of lower than 100°C may interfere with the cool-solidification of the mixture containing the thermoplastic resin and the plasticizer solution. Hence, the moldability of the membrane may be reduced or the coarsely structured layer may be thicker than necessary. Alternatively, the pore size may be too large. A liquid that cannot form a uniform solution with the thermoplastic resin at a temperature of 250°C or lower has a low property of dissolving the thermoplastic resin so that the coarsely structured layer having a sufficient thickness may be difficult to form.

In the case of using polyvinylidene fluoride resin as the thermoplastic resin, examples of the nonvolatile liquid used include phthalic acid esters having a carbon chain length of seven or less in the ester chain, adipic acid esters, sebacic acid esters, phosphoric acid esters having a carbon chain length of eight or less in the ester chain, and citric acid esters. Preferred examples of the nonvolatile liquid include diheptyl phthalate, dibutyl phthalate, diethyl phthalate, dimethyl phthalate, dibutyl adipate, dibutyl sebacate, tri(2-ethylhexyl) phosphate, tributyl phosphate, and tributyl acetylcitrate. However, a plasticizer having a cyclic structure such as a phenyl group, a cresyl group, or a cyclohexyl group in the ester chain, specifically, dicyclohexyl phthalate (DCHP), triphenyl phosphate (TPP), cresyl diphenyl phosphate (CDP), tricresyl phosphate (TCP), or the like, is not preferred because of the small ability to form the coarsely structured layer.

For the formation of the densely structured layer in the membrane, the surface, on the side where the densely structured layer is to be formed, of the membrane is cooled. For the cooling of the membrane surface, for example, the membrane surface is contacted with a thermal conductor. For example, a metal, water, air or a plasticizer can be used as the thermal conductor.

In the case of introducing the coarsely structured layer to the inner surface side of the membrane in a hollow fiber form or a cylindrical form and forming the densely structured layer on the outer surface side of the membrane, for example, the mixture of the thermoplastic resin and the plasticizer is extruded into a hollow fiber form or a cylindrical form via a circular die, a circular spinneret, or the like. The nonvolatile liquid having the property of partially dissolving the thermoplastic resin is passed through the inner side of the membrane formed in a hollow fiber form or a cylindrical form to form the coarsely structured layer on the inner surface side. The outer side of the membrane is contacted with a cooling medium such as water to form the densely structured layer on the outer surface side.

In the case of introducing the coarsely structured layer to one surface side of the membrane in a sheet form and forming the densely structured layer on the other surface side, for example, the mixture of the thermoplastic resin and the plasticizer is extruded into a sheet form via a T die or the like. One surface side of the membrane formed in a sheet form is contacted with the nonvolatile liquid having the property of partially dissolving the thermoplastic resin to form the coarsely structured layer on the one surface side. The other surface side is cooled by contact with a cooling medium such as a roll made of a metal to form the densely structured layer on the other surface side.

In the case of introducing the coarsely structured layer to both surface sides of the membrane, the mixture of the thermoplastic resin and the plasticizer is extruded into a predetermined shape via a T die, a circular die, a circular spinneret, or the like. Both surfaces of the membrane are contacted with the nonvolatile liquid having the property of partially dissolving the thermoplastic resin to form the coarsely structured layer on both the surface sides of the membrane. Then, the membrane is cool-solidified. A long time from the contact of the membrane with the nonvolatile liquid having the property of partially dissolving the thermoplastic resin to the start of cooling may reduce the moldability of the membrane. Hence, the time from the contact of the membrane with the nonvolatile liquid to the start of cooling is, for example, 30 seconds or shorter, preferably 20 seconds or shorter, more preferably 10 seconds or shorter.

In the method for manufacturing the porous membrane according to the embodiment, the cooling rate for cool solidification is, for example, 50°C/min or higher, preferably 100°C/min or higher and $1 \times 10^5$°C/min or lower, more preferably 200°C/min or higher and $2 \times 10^4$°C/min or lower, for forming a homogeneous densely structured layer having a small pore size. In this context, use of water in cooling is preferred because rapid cooling is achieved by the evaporation of water.

In the plasticizer removal step of removing the plasticizer from the porous membrane, an extraction solvent is used for removing the plasticizer. It is preferred that the extraction solvent is a poor solvent for the thermoplastic resin and a good solvent for the plasticizer and have a boiling point lower than the melting point of the porous membrane. Examples of such an extraction solvent include: hydrocarbons such as hexane and cyclohexane; halogenated hydrocarbons such as methylene chloride and 1,1,1-trichloroethane; alcohols such as ethanol and isopropanol; ethers such as diethyl ether and tetrahydrofuran; ketones such as acetone and 2-butanone; and water.

The extraction solvent is warmed in the range of, for example, lower than the boiling point of the extraction solvent, preferably the boiling point - 5°C or lower. This facilitates diffusing the extraction solvent and the plasticizer and improves plasticizer extraction efficiency.

There are a plurality of concreate methods for removing the plasticizer from the porous membrane using the extraction solvent. The first method for removing the plasticizer from the porous membrane involves dipping the porous membrane cut into a predetermined size in a container containing the extraction solvent, thoroughly washing the porous membrane, and then drying the solvent attached to the porous membrane either in air or by hot air. Alternatively, in the second method for removing the plasticizer from the porous membrane, the solvent may be replaced with another liquid such as water. The first method or the second method to be adopted may be determined depending on conditions for the next step, etc. In this context, dipping and washing repeated multiple times are preferred because the plasticizer remaining in the porous membrane is decreased. For preventing the porous membrane from being shrunk during a series of steps of dipping, washing, and drying, it is preferred to restrain both ends of the porous membrane.

The second method for removing the plasticizer from the porous membrane involves continuously sending the porous membrane into a tank filled with the extraction solvent, dipping the porous membrane in the tank for a time sufficient for removing the plasticizer, and then drying the solvent attached to the porous membrane. In this context, the inside of the tank may be divided into multiple stages, and the porous membrane may be sequentially sent into the tanks differing in the concentration of the solvent. Alternatively, the concentration gradient of the solvent may be set by supplying the extraction solvent in a direction opposite to the travelling direction of the porous membrane.

The concentration of the plasticizer remaining in the porous membrane after the removal of the plasticizer is, for example, 1% by mass or lower, preferably 500 ppm by mass or lower. The plasticizer remaining in the porous membrane can be quantified by gas chromatography, liquid chromatography, or the like.

The porous membrane of which the plasticizer is removed is heat-treated at a temperature of 132°C or higher, preferably 133°C or higher, more preferably 134°C or higher, further preferably 135°C or higher, and lower than the melting point of the thermoplastic resin, preferably 150°C or lower, more preferably 145°C or lower, further preferably 140°C or lower. By heat-treating the porous membrane at 132°C or higher, the proportion of $\alpha$ crystals of the thermoplastic resin in the densely structured layer of the porous membrane is elevated so that the ratio of $\alpha$ crystal strength to $\beta$ crystal strength of the thermoplastic resin in the densely structured layer of the porous membrane is 5.0 or more. By heat-treating the porous membrane at a temperature of lower than the melting point of the thermoplastic resin, damage to the porous membrane can be reduced. By heat-treating the porous membrane at 150°C or lower, the ratio of $\alpha$ crystal strength to $\beta$ crystal strength of the thermoplastic resin in the densely structured layer of the porous membrane is 11.0 or less so that $\beta$ crystals can exist at a given proportion in the porous membrane. Hence, sufficient reaction efficiency can be obtained in the case of modifying the porous membrane surface using graft polymerization or the like.

The heat treatment step is carried out for, for example, one hour or longer and nine hours or shorter or two hours or longer and eight hours or shorter, preferably three hours or longer and seven hours or shorter. When the porous membrane is heated for 1 hour or longer, the proportion of $\alpha$ crystals of the thermoplastic resin in the densely structured layer is elevated. By heating the porous membrane for seven hours or shorter, damage to the porous membrane can be reduced. In order to suppress the blockage of a pore ascribable to the shrinkage of the porous membrane, the heat treatment step may be carried out while the porous membrane of which the plasticizer is removed is pulled in at least two directions. Thus, the porous membrane is drawn and it is possible to control the maximum pore size. The pulling of the porous membrane in at least two directions can be carried out, for example, by fixing the ends of the porous membrane to reels or the like. In the case of performing the pulling by fixation to reels or the like, the length of the porous membrane is constant while the porous membrane is pulled.

Examples of the method for heating the porous membrane include placement of the porous membrane in hot air, dipping of the porous membrane in a heat medium, and contact of the porous membrane with a roll made of a metal temperature-controlled by heating. When the ratio of $\alpha$ crystal strength to $\beta$ crystal strength of the thermoplastic resin in the densely structured layer is 5.0 or more, the heat resistance of the porous membrane is improved so that the shrinkage of the porous membrane is reduced. Hence, for example, even if a user who has purchased the manufactured porous membrane subjects the porous membrane to treatment such as high-pressure steam sterilization, the porous membrane is prevented from being shrunk or deformed.

In the case of using the porous membrane according to the embodiment in virus removal, it is preferred to impart hydrophilicity to the porous membrane surface, for preventing the blockage of the pore ascribable to the adsorption of proteins. Hence, the method for manufacturing the porous membrane according to the embodiment preferably further comprises a hydrophilization treatment step of graft-polymerizing a hydrophilic monomer to the heat-treated porous membrane.

The method for hydrophilizing the porous membrane surface includes, for example, a method which involves irradiating the porous membrane surface with a radiation such as electron beam or $\gamma$ ray, or treating the porous membrane surface with a peroxide to generate radicals in the porous membrane, and grafting a hydrophilic acrylic monomer or methacrylic monomer to the pore surface of the porous membrane. Other examples of the method for hydrophilizing the porous membrane surface include a method which involves dipping the porous membrane in a solution containing a surfactant, and then drying the porous membrane so that the surfactant remains therein, a method which involves premixing a hydrophilic polymer during porous membrane formation, and a method which involves dipping the porous membrane in a solution containing a hydrophilic polymer, and then drying the porous membrane to form a coating of the hydrophilic polymer on the pore surface.

Among these methods, the method which involves grafting a hydrophilic monomer is preferred from the viewpoint of the durability of the hydrophilized porous membrane. Hydrophilization treatment by a radiation graft polymerization method disclosed in Japanese Patent Laid-Open No. 62-179540, Japanese Patent Laid-Open No. 62-258711, and U.S. Patent No. 4,885,086 is preferred because a homogeneous hydrophilized layer can be formed in the inner surface of a pore.

The hydrophilization treatment of the porous membrane by the radiation graft polymerization method comprises the steps of: irradiating the porous membrane with an ionizing radiation such as electron beam or $\gamma$ ray to generate radicals in the resin constituting the porous membrane; and contacting the porous membrane with a hydrophilic monomer. The step of generating radicals and the step of contacting the porous membrane with the hydrophilic monomer is carried out in an arbitrary order. Provided that the step of contacting the porous membrane with the hydrophilic monomer is carried out after the step of generating radicals, the hydrophilic monomer is less likely to form a free oligomer.

An acrylic or methacrylic monomer containing a sulfone group, a carboxyl group, an amide group, a neutral hydroxy group, or the like can be suitably used as the hydrophilic monomer, though the hydrophilic monomer is not limited thereto. When the porous membrane is contacted with the hydrophilic monomer, the hydrophilic monomer may be any of a gas, a liquid, and a solution. For forming a homogeneous hydrophilized layer on the porous membrane, it is preferred that the hydrophilic monomer is a solution.

The method for manufacturing the porous membrane according to the embodiment may optionally comprise a cross-linking treatment step using an ionizing radiation or the like, or a functional group introduction step using chemical surface modification.

The porous membrane having heat resistance according to the embodiment can be used for a wide range of purposes as, for example, a medical separation membrane for use in the removal of viruses, bacteria, or the like, the concentration of proteins, and the removal of impurities from media, etc. a filter for industrial processes which removes fine particles from chemical solutions, treated water, or the like, a phase separation membrane for oil-water separation or liquid-gas separation, a cleanup filter aimed at cleaning up water and sewerage, a separator for lithium ion cells or the like, and a solid electrolyte support for polymer cells.

Hereinafter, Examples will be described. The testing methods shown in Examples are as follows.

(1) Outside diameter, inside diameter and membrane thickness of hollow fiber porous membrane

The outside diameter and inside diameter of a porous membrane in a hollow fiber form were measured by photographing the vertical cross section of the porous membrane under a stereoscopic microscope. The membrane thickness was calculated as 1/2 of the difference between the outside diameter and the inside diameter of the hollow fiber.

(2) Porosity

The porosity h of a porous membrane was calculated according to the following equation (5) using density D of a resin, and measured volume v and mass m of the porous membrane.

$$h\ (\%)\ =\ (1\ -\ m\ /\ (D\ \times\ v))\ \times\ 100\ \ \ \ (5)$$

(3) Water permeation rate

The permeation rate T of pure water at a temperature of 25°C by constant-pressure dead-end filtration using a porous membrane was measured. The water permeation rate $T_W$ (L/m$^2$/h/98 kPa) of the porous membrane was calculated according to the following equation (6) on the basis of membrane area A, filtration pressure P (300 kPa), and filtration time $T_m$.

$$T_W\ =\ T\ /\ (A\ \times\ T_m\ \times\ P\ /\ 98))\ \ \ \ (6)$$

(4) Maximum pore size

A bubble point (Pa) determined by the bubble point method conforming to ASTM F316-86 was calculated as the maximum pore size (nm). Hydrofluoroether (Novec(R) 7200 manufactured by 3M Japan Ltd.) having surface tension of 13.6 mN/m was used as a testing solution in which the membrane was dipped.

(5) Proportions of $\alpha$ crystal and $\beta$ crystal in porous membrane

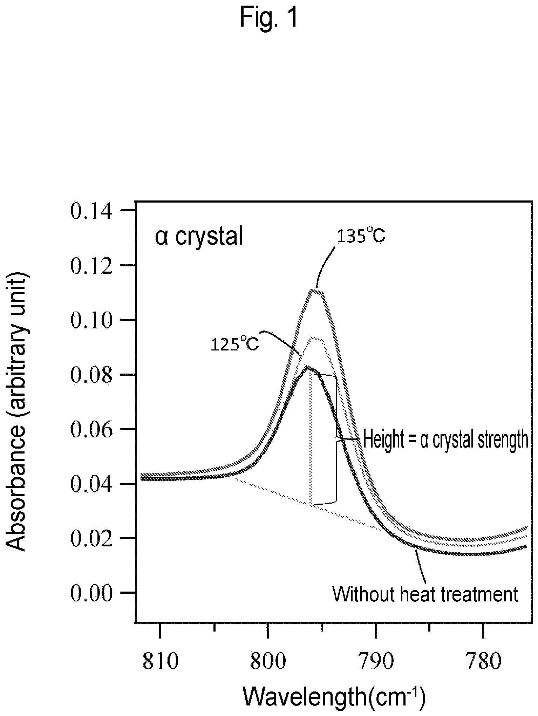

Fourier transform infrared spectrometry was performed using Spectrum One manufactured by PerkinElmer, Inc. The measurement was performed by the attenuated total reflection (ATR) method, and the wavenumber resolution was set to 4 cm$^{-1}$. In the spectrum obtained by the measurement of each sample, the height of a data point at 795 cm$^{-1}$ on a straight line connecting two points, absorbance at 785 cm$^{-1}$ and absorbance at 805 cm$^{-1}$, was used as $\alpha$ crystal strength, while the height of a data point at 840 cm$^{-1}$ on a straight line connecting two points, absorbance at 835 cm$^{-1}$ and absorbance at 848 cm$^{-1}$, was used as $\beta$ crystal strength to determine $\alpha$ crystal strength/$\beta$ crystal strength. The calculation image is shown in Figure 1.

(6) Rate of shrinkage of porous membrane

The difference between the length of a porous membrane in a hollow fiber form before dry heat treatment at 130°C and the length of the porous membrane in a hollow fiber form after dry heat treatment at 130°C was determined, and divided by the length of the porous membrane in a hollow fiber form before dry heat treatment at 130°C, and the obtained value was used as the rate of shrinkage of the porous membrane.

(Example 1)

A composition consisting of 49% by mass of polyvinylidene fluoride resin (manufactured by Kureha Corp., KF #1300) and 51% by mass of dicyclohexyl phthalate (DCHP, manufactured by Hokko Chemicals Co., Ltd.) was mixed by stirring at room temperature using a Henschel mixer. The resulting mixture was added from a hopper and uniformly dissolved by melt mixing at 210°C using a twin-screw extruder (26 mmϕ, L/D = 50). Subsequently, while dibutyl phthalate (manufactured by Daihachi Chemical Industry Co., Ltd.) having a temperature of 62.5°C was injected at a rate of 7.1 g/min to the hollow inside part, the mixture was extruded into a hollow fiber form at a discharge rate of 4.2 g/min from a spinneret consisting of a circular orifice having an inside diameter of 0.8 mm and an outside diameter of 1.05 mm. The extrudate was cool-solidified in a water bath temperature-controlled to 25°C, and taken up to a reel at a rate of 50 m/min (draft ratio: 5 times). Then, dicyclohexyl phthalate and dibutyl phthalate were removed by extraction with 2-propanol (manufactured by Tokuyama Corp.), and the attached 2-propanol was replaced with water. Then, the membrane was subjected, in a state dipped in water, to heat treatment at 135°C for four hours using a high-pressure steam sterilization apparatus (manufactured by Sakura SI Co., Ltd., FRD-G12A30Z). In order to prevent shrinkage, the membrane was fixed in a constant-length state during the heat treatment. After the heat treatment, the fixation was canceled, and the attached water was replaced with 2-propanol. Then, the membrane was dried in vacuum at 60°C to obtain a porous membrane in a hollow fiber form according to Example 1.

(Example 2)

A porous membrane in a hollow fiber form according to Example 2 was obtained by the same steps as in Example 1 except that the heat treatment at 135°C was carried out for two hours.

(Example 3)

A porous membrane in a hollow fiber form according to Example 3 was obtained by the same steps as in Example 1 except that the heat treatment at 135°C was carried out for eight hours.

(Comparative Example 1)

A porous membrane in a hollow fiber form according to Comparative Example 1 was obtained by the same steps as in Example 1 except that after the removal of the plasticizer by extraction, heat treatment was carried out at 125°C for four hours.

(Comparative Example 2)

A porous membrane in a hollow fiber form according to Comparative Example 2 was obtained by the same steps as in Example 1 except that after the removal of the plasticizer by extraction, heat treatment was carried out at 125°C for two hours.

(Comparative Example 3)

A porous membrane in a hollow fiber form according to Comparative Example 3 was obtained by the same steps as in Example 1 except that after the removal of the plasticizer by extraction, heat treatment was carried out at 125°C for eight hours.

(Comparative Example 4)

A porous membrane in a hollow fiber form according to Comparative Example 4 was obtained by the same steps as in Example 1 except that after the removal of the plasticizer by extraction, no heat treatment was carried out.

(Example 4)

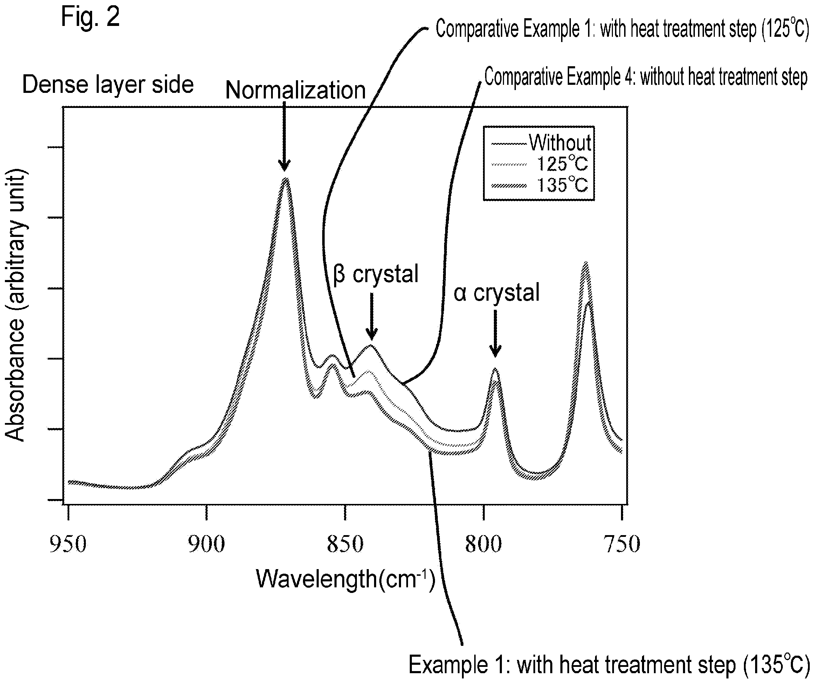

The porous membranes in a hollow fiber form according to Example 1 and Comparative Examples 1 and 4 were analyzed using a Fourier transform infrared spectrophotometer (FT-IR, Spectrum One manufactured by PerkinElmer, Inc.) to obtain absorption spectra. As a result, as shown in Figure 2, peaks of $\alpha$ crystals (794 cm$^{-1}$) and $\beta$ crystals

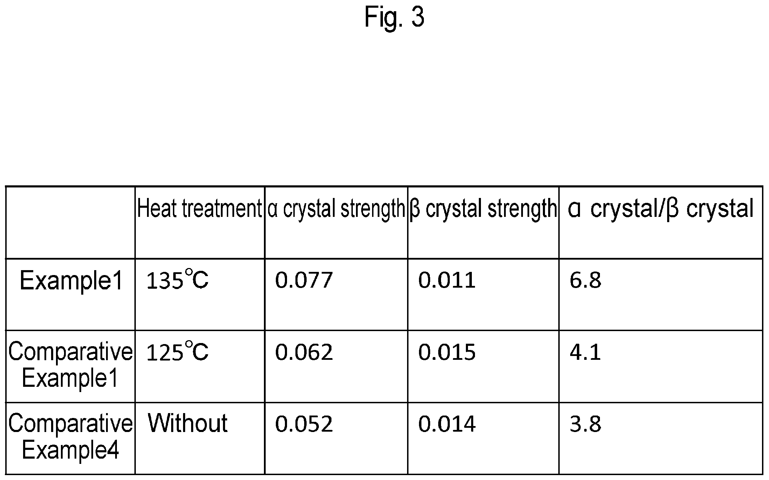

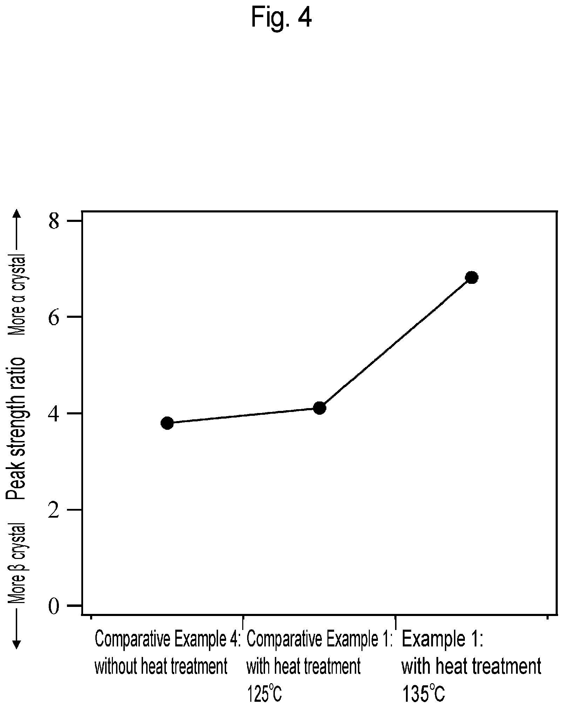

(840 cm$^{-1}$) were confirmed in the dense layer. $\alpha$ crystal strength relative to $\beta$ crystal strength was calculated as an index indicating the ratio of $\alpha$ crystals to $\beta$ crystals. The results are shown in Figures 3 and 4. The dense layer had a tendency that as the temperature of the heat treatment was higher, the proportion of $\beta$ crystals was decreased while the proportion of $\alpha$ crystals was increased.

(Comparative Example 5)

A porous membrane in a hollow fiber form according to Comparative Example 5 was obtained by the same steps as in Example 1 except that after the removal of the plasticizer by extraction, heat treatment was carried out at 130°C for one hour. As a result of analyzing the porous membrane in a hollow fiber form according to Comparative Example 5 in the same way as in Example 4, $\alpha$ crystal strength relative to $\beta$ crystal strength was 4.5 in the dense layer.

(Example 5)

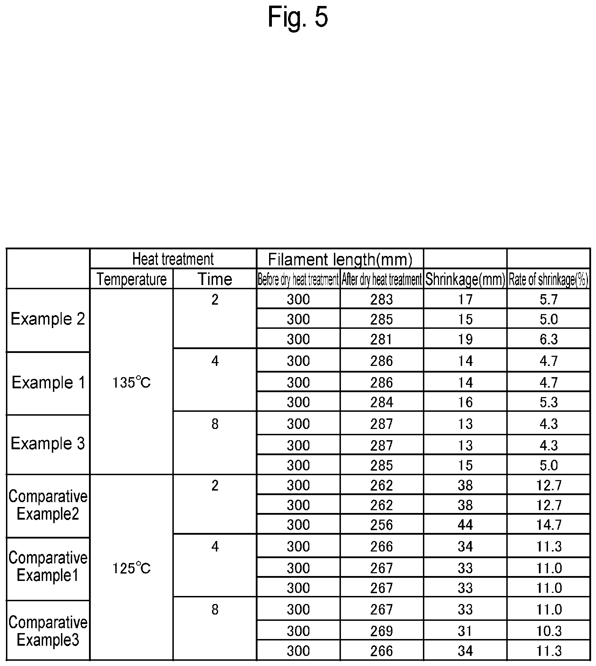

The rate of shrinkage ascribable to dry heat treatment at 130°C was measured for each of the porous membranes in the hollow fiber form according to Examples 1, 2 and 3 and Comparative Examples 1, 2 and 3. For the dry heat treatment, the porous membrane in the hollow fiber form was not fixed in a constant-length state. As a result, as shown in Figure 5, the rate of shrinkage ascribable to one operation of dry heat treatment at 130°C was 6.5% or less in the porous membranes in the hollow fiber form according to Examples 1, 2 and 3. On the contrary, the rate of shrinkage ascribable to one operation of dry heat treatment at 130°C was 10.0% or more in the porous membranes in the hollow fiber form according to Comparative Examples 1, 2 and 3.

(Example 6)

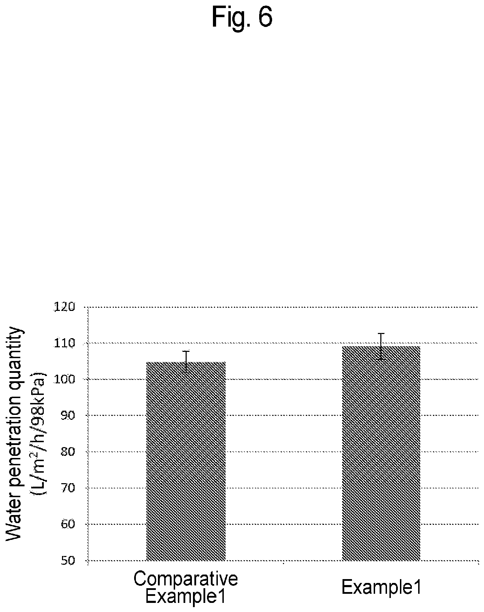

The water permeation rate was measured for 24 samples of the porous membrane in the hollow fiber form according to Example 1. Also, the water permeation rate was measured for 12 samples of the porous membrane in the hollow fiber form according to Comparative Example 1. As a result, as shown in Figure 6, the average water permeation rate of the porous membrane in the hollow fiber form according to Example 1 was 109.1 L/m$^2$/h/98 kPa with standard deviation of 3.6. On the contrary, the average water permeation rate of the porous membrane in the hollow fiber form according to Comparative Example 1 was 104.8 L/m$^2$/h/98 kPa with standard deviation of 3.0.

(Example 7)

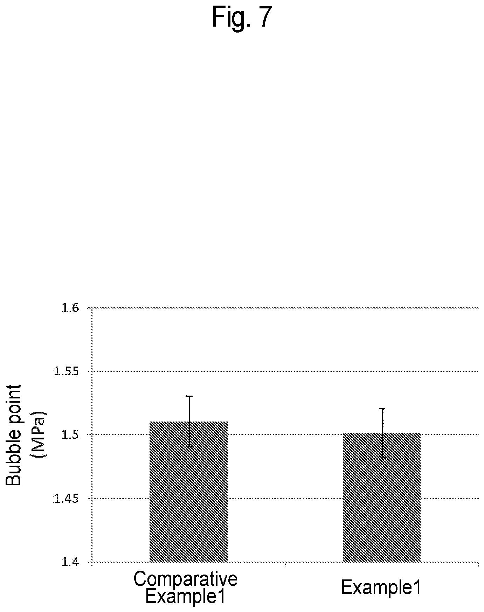

The bubble point was measured for 24 samples of the porous membrane in the hollow fiber form according to Example 1. Also, the bubble point was measured for 12 samples of the porous membrane in the hollow fiber form according to Comparative Example 1. As a result, as shown in Figure 7, the average bubble point of the porous membrane in the hollow fiber form according to Example 1 was 1.502 MPa with standard deviation of 0.019. On the contrary, the average bubble point of the porous membrane in the hollow fiber form according to Comparative Example 1 was 1.510 MPa with standard deviation of 0.020.

(Example 8)

The porous membrane according to Example 1 was subjected to hydrophilization treatment by the graft method. The reaction solution was obtained by dissolving hydroxypropyl acrylate at 8 vol% in a 25 vol% aqueous solution of 3-butanol, and performing nitrogen bubbling for 20 minutes with the solution maintained at 45°C. Next, the porous membrane according to Example 1 was irradiated with 25 kGy of Co60 $\gamma$ ray while cooled to - 60°C or lower in dry ice in the nitrogen atmosphere. The porous membrane thus irradiated was left at room temperature for 17 minutes, then contacted with the reaction solution under reduced pressure of 200 PaA or lower, and left standing at 45°C for one hour. Then, the porous membrane was washed with 2-propanol, and the attached 2-propanol was replaced with water. Then, the membrane was heat-treated at 125°C for one hour and cooled. Then, the attached water was replaced with 2-propanol. The membrane was dried in vacuum at 60°C to obtain a hydrophilized porous membrane according to Example 8. The rate of increase in the mass of the obtained membrane was measured and was consequently 8%. It was confirmed that upon contact of the obtained membrane with water, the water spontaneously penetrated the inside of the pores.

(Comparative Example 6)

A hydrophilized porous membrane according to Comparative Example 6 was obtained by the same method as in the hydrophilized porous membrane according to Example 8 except that the porous membrane according to Comparative Example 1 was used.

(Comparative Example 7)

A porous membrane in a hollow fiber form was obtained by the same steps as in Example 1 except that heat treatment was carried out at 175°C for one hour.

The obtained porous membrane was subjected to hydrophilization treatment by the graft method. The reaction solution was obtained by dissolving hydroxypropyl acrylate at 8 vol% in a 25 vol% aqueous solution of 3-butanol, and performing nitrogen bubbling for 20 minutes with the solution maintained at 45°C. Next, the porous membrane according to Example 1 was irradiated with 25 kGy of Co60 $\gamma$ ray while cooled to - 60°C or lower in dry ice in the nitrogen atmosphere. The porous membrane thus irradiated was left at room temperature for 17 minutes, then contacted with the reaction solution under reduced pressure of 200 PaA or lower, and left standing at 45°C for one hour. Then, the porous membrane was washed with 2-propanol, and the attached 2-propanol was replaced with water. Then, the membrane was heat-treated at 175°C for one hour and cooled. Then, the attached water was replaced with 2-propanol. The membrane was dried in vacuum at 60°C to obtain a hydrophilized porous membrane according to Comparative Example 7. The rate of increase in the mass of the obtained membrane was measured and was consequently 3.1%. Upon contact of the obtained membrane with water, the water did not spontaneously penetrate the inside of the pores. In this state, the water permeation rate was not able to be measured.

(Example 9)

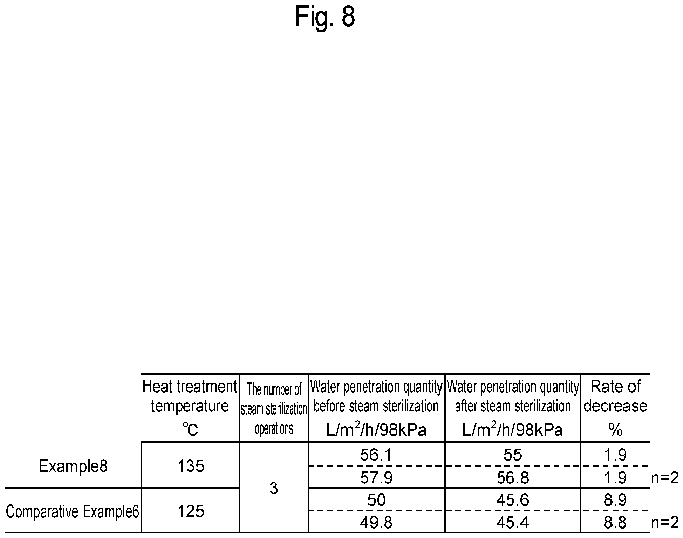

The porous membranes in the hollow fiber form according to Example 8 and Comparative Example 6 were each subjected to steam sterilization at 130°C in a state where both ends of the membrane were fixed so as to be in a constant-length state. The water permeation rate was measured before and after the steam sterilization at 130°C. As a result, as shown in Figure 8, the water permeation rate of the porous membrane in the hollow fiber form according to Example 8 was decreased by 1.9% on average as compared with that before the steam sterilization, by three operations of the steam sterilization at 130°C. On the contrary, the water permeation rate of the porous membrane in the hollow fiber form according to Comparative Example 6 was decreased by 8.8% on average as compared with that before the steam sterilization, by three operations of the steam sterilization at 130°C.

(Example 10)

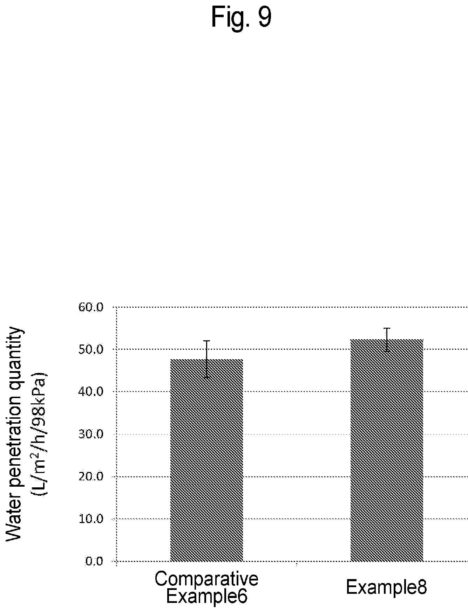

The water permeation rate was measured for 12 samples of the hydrophilized porous membrane according to Example 8. Also, the water permeation rate was measured for 12 samples of the hydrophilized porous membrane according to Comparative Example 6. In this Example, the hydrophilized porous membranes according to Example 8 and Comparative Example 6 were neither fixed at both ends in a constant-length state nor subjected to steam sterilization. As a result, as shown in Figure 9, the average water permeation rate of the hydrophilized porous membrane according to Example 8 was 52.3 $L/m^2/h/98$ kPa with standard deviation of 2.8. On the contrary, the average water permeation rate of the hydrophilized porous membrane according to Comparative Example 6 was 47.7 $L/m^2/h/98$ kPa with standard deviation of 4.4.

(Example 11)

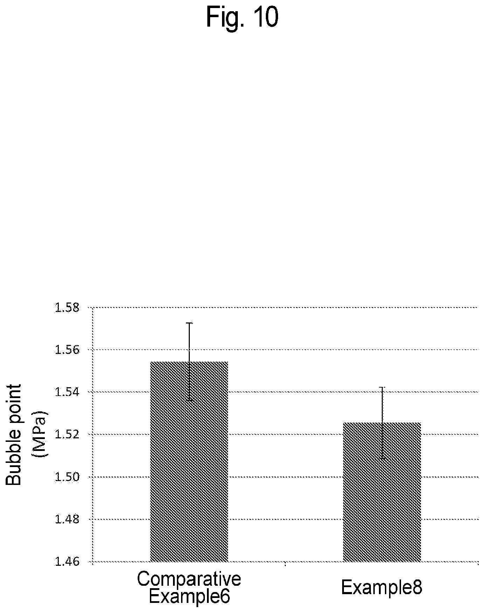

The bubble point was measured for 12 samples of the hydrophilized porous membrane according to Example 8. Also, the bubble point was measured for 12 samples of the hydrophilized porous membrane according to Comparative Example 6. As a result, as shown in Figure 10, the average bubble point of the hydrophilized porous membrane according to Example 7 was 1.530 MPa with standard deviation of 0.017. On the contrary, the average bubble point of the hydrophilized porous membrane according to Comparative Example 4 was 1.550 MPa with standard deviation of 0.018.

(Example 12)

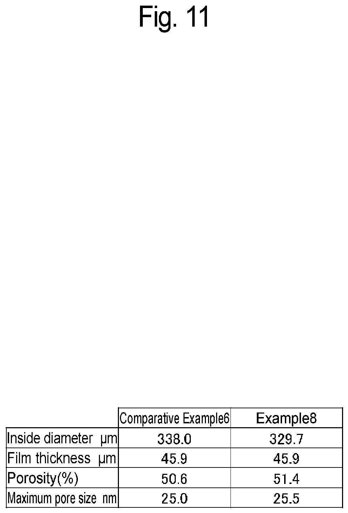

The inside diameter, the membrane thickness, the porosity, and the maximum pore were measured for each of the hydrophilized porous membranes according to Example 8 and Comparative Example 6. The results are shown in Figure 11.

**Claims**

1.  A porous membrane
    comprising a thermoplastic resin, and
    having a densely structured layer, wherein
    the ratio of $\alpha$ crystal strength to $\beta$ crystal strength of the thermoplastic resin in the densely structured layer is 5.0 or more.

2.  The porous membrane according to claim 1, wherein the maximum pore size is 23.5 nm or larger and 30.0 nm or smaller.

3.  The porous membrane according to claim 1 or 2, wherein the thermoplastic resin is polyvinylidene fluoride.

4.  The porous membrane according to any one of claims 1 to 3, wherein a graft chain having a hydrophilic monomer unit is introduced in pore surface.

5.  The porous membrane according to claim 4, wherein the graft ratio is 5% or more and 20% or less.

6.  The porous membrane according to any one of claims 1 to 5, further having a coarsely structured layer.

7.  The porous membrane according to any one of claims 1 to 6, wherein the porous membrane is a hollow fiber membrane.

8.  The porous membrane according to any one of claims 1 to 7, wherein the ratio of $\alpha$ crystal strength to $\beta$ crystal strength of the thermoplastic resin in the densely structured layer is 11.0 or less.

9.  A method for manufacturing a porous membrane, comprising:

    a mixing step of obtaining a mixture of a thermoplastic resin and a plasticizer;
    a membrane formation step of forming a porous membrane having a densely structured layer from the mixture;
    a plasticizer removal step of removing the plasticizer from the porous membrane; and
    a heat treatment step of heat-treating the porous membrane of which the plasticizer is removed at a temperature of 132°C or higher and lower than the melting point of the thermoplastic resin, wherein
    the ratio of $\alpha$ crystal strength to $\beta$ crystal strength of the thermoplastic resin in the densely structured layer is 5.0 or more.

10. The method for manufacturing the porous membrane according to claim 9, wherein the heat treatment step is carried out for one hour or longer and nine hours or shorter.

11. The method for manufacturing the porous membrane according to claim 9 or 10, wherein the heat treatment step is carried out while the porous membrane of which the plasticizer is removed is pulled in at least two directions.

12. The method for manufacturing the porous membrane according to any one of claims 9 to 11, wherein the maximum pore size of the heat-treated porous membrane is 23.5 nm or larger and 30.0 nm or smaller.

13. The method for manufacturing the porous membrane according to any one of claims 9 to 12, wherein the thermoplastic resin is polyvinylidene fluoride.

14. The method for manufacturing the porous membrane according to any one of claims 9 to 13, further comprising a hydrophilization treatment step of graft-polymerizing a hydrophilic monomer to the heat-treated porous membrane.

15. The method for manufacturing the porous membrane according to any one of claims 9 to 14, wherein the porous membrane formed in the membrane formation step further has a coarsely structured layer.

16. The method for manufacturing the porous membrane according to any one of claims 9 to 15, wherein the porous membrane is a hollow fiber membrane.

17. The method for manufacturing the porous membrane according to any one of claims 9 to 16, wherein the ratio of $\alpha$

crystal strength to β crystal strength of the thermoplastic resin in the densely structured layer is 11.0 or less.

18. The method for manufacturing the porous membrane according to any one of claims 9 to 17, wherein in the heat treatment step, the porous membrane of which the plasticizer is removed is heat-treated at a temperature of 132°C or higher and 150°C or lower.

# Fig. 1

Fig. 2

Comparative Example 1: with heat treatment step (125°C)

Comparative Example 4: without heat treatment step

Dense layer side  Normalization

Example 1: with heat treatment step (135°C)

β crystal

α crystal

Without
125°C
135°C

Absorbance (arbitrary unit)

Wavelength(cm⁻¹)

950    900    850    800    750

EP 3 536 392 A1

Fig. 3

|  | Heat treatment | α crystal strength | β crystal strength | α crystal/β crystal |
|---|---|---|---|---|
| Example1 | 135°C | 0.077 | 0.011 | 6.8 |
| Comparative Example1 | 125°C | 0.062 | 0.015 | 4.1 |
| Comparative Example4 | Without | 0.052 | 0.014 | 3.8 |

# Fig. 4

# Fig. 5

| | Heat treatment | | Filament length(mm) | | | |
|---|---|---|---|---|---|---|
| | Temperature | Time | Before dry heat treatment | After dry heat treatment | Shrinkage(mm) | Rate of shrinkage(%) |
| Example 2 | 135℃ | 2 | 300 | 283 | 17 | 5.7 |
| | | | 300 | 285 | 15 | 5.0 |
| | | | 300 | 281 | 19 | 6.3 |
| Example 1 | | 4 | 300 | 286 | 14 | 4.7 |
| | | | 300 | 286 | 14 | 4.7 |
| | | | 300 | 284 | 16 | 5.3 |
| Example 3 | | 8 | 300 | 287 | 13 | 4.3 |
| | | | 300 | 287 | 13 | 4.3 |
| | | | 300 | 285 | 15 | 5.0 |
| Comparative Example2 | 125℃ | 2 | 300 | 262 | 38 | 12.7 |
| | | | 300 | 262 | 38 | 12.7 |
| | | | 300 | 256 | 44 | 14.7 |
| Comparative Example1 | | 4 | 300 | 266 | 34 | 11.3 |
| | | | 300 | 267 | 33 | 11.0 |
| | | | 300 | 267 | 33 | 11.0 |
| Comparative Example3 | | 8 | 300 | 267 | 33 | 11.0 |
| | | | 300 | 269 | 31 | 10.3 |
| | | | 300 | 266 | 34 | 11.3 |

# Fig. 6

Fig. 7

# Fig. 8

| | Heat treatment temperature °C | The number of steam sterilization operations | Water penetration quantity before steam sterilization L/m²/h/98kPa | Water penetration quantity after steam sterilization L/m²/h/98kPa | Rate of decrease % | |
|---|---|---|---|---|---|---|
| Example8 | 135 | 3 | 56.1 | 55 | 1.9 | |
| | | | 57.9 | 56.8 | 1.9 | n=2 |
| Comparative Example6 | 125 | | 50 | 45.6 | 8.9 | |
| | | | 49.8 | 45.4 | 8.8 | n=2 |

Fig. 9

# Fig. 10

# Fig. 11

| | Comparative Example6 | Example8 |
|---|---|---|
| Inside diameter μm | 338.0 | 329.7 |
| Film thickness μm | 45.9 | 45.9 |
| Porosity(%) | 50.6 | 51.4 |
| Maximum pore size nm | 25.0 | 25.5 |

## INTERNATIONAL SEARCH REPORT

| | International application No. |
|---|---|
| | PCT/JP2017/039267 |

**A. CLASSIFICATION OF SUBJECT MATTER**
Int.Cl. B01D69/00(2006.01)i, B01D67/00(2006.01)i, B01D69/08(2006.01)i,
B01D71/34(2006.01)i, C08J9/26(2006.01)i

According to International Patent Classification (IPC) or to both national classification and IPC

**B. FIELDS SEARCHED**

Minimum documentation searched (classification system followed by classification symbols)
Int.Cl. B01D53/22, B01D61/00-71/82, C02F1/44, C08J9/00-9/42

Documentation searched other than minimum documentation to the extent that such documents are included in the fields searched
Published examined utility model applications of Japan 1922–1996
Published unexamined utility model applications of Japan 1971–2017
Registered utility model specifications of Japan 1996–2017
Published registered utility model applications of Japan 1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-076446 A (ASAHI KASEI CHEMICALS CORPORATION)<br>01 May 2014, claims 1-2, 5, paragraph [0046], table 1<br>& US 2009/0101600 A1, claims 15-16, 19, paragraph [0048], table 1 & EP 2008706 A1 & KR 10-2008-0089476 A & CA 2649806 A1 & CN 101426566 A & SG 154449 A1 & AU 2007239311 A1 & RU 2008145581 A & TW 200806385 A & MY 145009 A | 1-3, 7-8<br>4-6, 9-18 |
| Y | WO 2015/156403 A1 (ASAHI KASEI MEDICAL CO., LTD.) 15 October 2015, paragraphs [0041], [0094]<br>& US 2017/0029462 A1, paragraphs [0053], [0107] & EP 3130392 A1 & KR 10-2016-0087891 A & CN 105980037 A | 4-6, 14-15 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 December 2017 | 19 December 2017 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

EP 3 536 392 A1

**INTERNATIONAL SEARCH REPORT**

International application No.

PCT/JP2017/039267

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 62-262705 A (TERUMO CORPORATION) 14 November 1987, claims 1-3, 6 & US 4845132 A, claims 1, 4 & EP 249513 A2 & CA 1313441 C & KR 10-1990-0008692 B1 | 4-6, 14-15 |
| Y | WO 2016/117565 A1 (ASAHI KASEI MEDICAL CO., LTD.) 28 July 2016, paragraphs [0024], [0059] (Family: none) | 6, 15 |
| Y | WO 2016/031834 A1 (ASAHI KASEI MEDICAL CO., LTD.) 03 March 2016, claim 1, paragraph [0048] & US 2017/0266626 A1, claim 1, paragraphs [0123]-[126] & EP 3195922 A1 & KR 10-2016-0137628 A & AU 2015309939 A1 & CA 2959291 A1 & CN 106573203 A | 6, 15 |
| Y | JP 2008-062226 A (KURARAY CO., LTD.) 21 March 2008, paragraphs [0044], [0051], [0052] (Family: none) | 9-18 |
| Y | JP 2008-062229 A (KURARAY CO., LTD.) 21 March 2008, claim 1, paragraphs [0020], [0021] (Family: none) | 9-18 |
| Y | JP 2010-242060 A (TORAY INDUSTRIES) 28 October 2010, paragraphs [0031], [0052] (Family: none) | 11-12, 14-15 |
| Y | JP 2011-162669 A (TORAY INDUSTRIES) 25 August 2011, paragraphs [0041], [0050] (Family: none) | 11-12, 14-15 |
| Y | WO 2016/104792 A1 (TORAY INDUSTRIES) 30 June 2016, paragraph [0076] & EP 3239222 A1, paragraph [0077] & KR 10-2017-0101290 A & CN 107250234 A | 11-12, 14-15 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60097001 A
- JP 3979521 B
- JP 4531395 B
- WO 0128667 A
- JP 62179540 A
- JP 62258711 A
- US 4885086 A